# DEMANDE DE BREVET EUROPEEN

(11) **EP 0 798 658 A1**
(43) Date de publication de la demande: **01.10.1997**
(21) Numéro de dépôt: 97400663.7
(22) Date de dépôt: 24.03.1997
(51) Int. Cl.: G06K 7/08, G07B 15/02

(54) **Dispositif de transfert d'informations entre un objet portable et un lecteur**

(30) Priorité: 26.03.1996 FR 9603714
(71) Demandeur: SCHLUMBERGER INDUSTRIES, F-92120 Montrouge (FR)
(72) Inventeur: Catté, Etienne, 78560 Port-Marly (FR)
(74) Mandataire: Lemoyne, Didier

(57) **Abrégé**

Dispositif de transfert électronique d'informations entre, d'une part, un composant électronique disposé sur un substrat d'un objet portable, substrat sur lequel est également constituée une première antenne reliée audit composant, et, d'autre part, un lecteur comportant une deuxième antenne, ledit transfert électronique d'informations étant effectué par couplage inductif entre lesdites première et deuxième antennes, sans contact électrique entre le composant et le lecteur.

Selon l'invention ledit lecteur comporte un moyen de marquage apte à inscrire une marque sur ledit substrat lorsque l'objet portable est placé à proximité immédiate du lecteur.

Application notamment au transport, l'objet portable étant un ticket de trajet unique ou un ticket aller-retour.

## Description

La présente invention concerne un dispositif de transfert entre un objet portable et un lecteur.

L'invention trouve une application particulièrement avantageuse dans le domaine du transport, ledit objet portable étant alors un ticket de trajet unique ou un ticket aller-retour. Un autre domaine d'application de l'invention est celui du contrôle d'accès, l'objet portable étant dans ce cas un badge d'accès unique à certains locaux.

On connaît de l'état de la technique, notamment dans le domaine du transport, des dispositifs, souvent appelés "cartes sans contact", qui permettent d'effectuer des transferts électroniques d'informations entre, d'une part, un composant électronique disposé sur le substrat d'une carte au format ISO, constituant l'objet portable, et, d'autre part, un lecteur installé dans une borne de paiement placée sur le chemin d'accès au moyen de transport considéré.

Le composant électronique de la carte est relié à une première antenne configurée sur le substrat, tandis que le lecteur comporte une deuxième antenne, de telle sorte que, lorsque la carte est approchée du lecteur de la borne, le couplage inductif entre les première et deuxième antennes s'établisse, permettant ainsi le transfert électronique d'informations, sans aucun contact électrique entre le composant et le lecteur.

Des informations concernant, par exemple, le nombre de trajets encore disponibles sur un parcours donné, sont stockées dans une mémoire non volatile du composant et sont susceptibles d'être modifiées par le lecteur lorsque la carte est présentée au voisinage de la borne.

Bien entendu, le transfert d'informations devant pouvoir s'effectuer mains libres sur des portées de l'ordre de 10 cm, les divers constituants de ces dispositifs sans contact, à savoir essentiellement les deux antennes, doivent être dimensionnées en conséquence, et sont de ce fait relativement onéreux. C'est pourquoi ce type de technologie est actuellement réservée aux cartes multiusage, comme les cartes de transport à abonnement, dont la validité expire à date fixe, par exemple mensuellement.

Si l'on envisage maintenant la possibilité de réaliser non plus des cartes à durée déterminée, indépendamment de l'usage qui en est fait, mais des tickets valables pour un trajet unique ou pour un aller-retour, il se pose le problème pour l'usager de savoir reconnaître, parmi tous les tickets dont il dispose à un moment donné, ceux qui ont déjà été utilisés, et donc inutilisables à nouveau, de ceux qui ne l'ont pas encore été, cette difficulté provenant du fait que les tickets de ce type sont en général vendus par carnets, de 10 tickets par exemple.

Aussi, le problème technique à résoudre par l'objet de la présente invention est de proposer un dispositif de transfert électronique d'informations entre, d'une part, un composant électronique disposé sur un substrat d'un objet portable, substrat sur lequel est également constituée une première antenne reliée audit composant, et, d'autre part, un lecteur comportant une deuxième antenne, ledit transfert électronique d'informations étant effectué par couplage inductif entre lesdites première et deuxième antennes, sans contact électrique entre le composant et le lecteur, dispositif qui permettait, dans le cas notamment d'objet portables constitués de tickets de transport à usage limité d'identifier les tickets vierges et les tickets déjà utilisés.

La solution au problème technique posé consiste, selon la présente invention, en ce que ledit lecteur comporte un moyen de marquage apte à inscrire une marque sur ledit substrat lorsque l'objet portable est placé à proximité immédiate du lecteur.

Ainsi, l'objet portable se trouve marqué lorsqu'il est présenté la première fois à une distance très proche, inférieure à quelques millimètres, du lecteur avec l'avantage pour l'usager de se trouver protégé, par l'objet portable lui-même, des effets néfastes du moyen de marquage qui, comme on le verra en détail plus loin, peut être, par exemple, un rayonnement laser, un flash ultraviolet ou encore un jet d'encre, un dispositif infra-rouge, et, plus généralement, tout système physique du marquage. La marque inscrite de cette manière indiquera à l'utilisateur que l'objet portable, ticket simple usage par exemple, a déjà été présenté à un lecteur. La proximité de l'objet portable et du lecteur présente également l'avantage de permettre un marquage propre.

De préférence, afin de s'assurer que le marquage est bien associé à un transfert vraiment effectué, telle qu'une transaction électronique, il est prévu que ledit lecteur comporte des moyens de commande dudit moyen de marquage, aptes à déclencher l'inscription de ladite marque sur le substrat de l'objet portable lors du transfert électronique d'informations.

Puisque la mise en oeuvre du dispositif de l'invention implique la présence rapprochée de l'objet portable par rapport au lecteur, le couplage inductif entre les première et deuxième antennes est très grand, en particulier notablement plus grand que celui des dispositifs sans contact du type mains libres actuels, ce qui permet d'envisager de limiter les performances des constituants du dispositif de l'invention. C'est ainsi que, selon l'invention, ladite première antenne couplée au composant électronique présente un facteur de qualité minimal ne permettant le transfert électronique d'informations qu'en cas de proximité immédiate de l'objet portable par rapport au lecteur.

L'antenne étant un constituant entrant pour une part importante dans le coût de l'objet portable, on obtient ainsi une réduction sensible du prix de revient, par exemple en utilisant des antennes simplement sérigraphiées sur le substrat. On sait que le prix de ce type d'antennes est lié à la densité en argent ou en cuivre des encres utilisées et donc directement au prix de l'encre.

Enfin, de manière à bien contrôler la possibilité d'effectuer le transfert d'informations dans de bonnes conditions, l'invention prévoit que ledit composant électronique de l'objet portable comprend des moyens de mesure de niveau de signal dans ladite première antenne et des moyens de comparaison dudit niveau à une valeur de référence stockée dans une mémoire non volatile du composant, le transfert électronique d'informations n'étant possible que si le niveau mesuré est au moins égal à ladite valeur de référence.

La description qui va suivre en regard des dessins annexés, donnés à titre d'exemples non limitatifs, fera bien comprendre en quoi consiste l'invention et comment elle peut être réalisée.

La figure 1 est une vue schématique en perspective d'un dispositif de transfert électronique d'informations selon l'invention.

La figure 2 est un schéma montrant des moyens de commande du moyen de marquage du dispositif de la figure 1.

La figure 3 est un diagramme représentant en fonction de la fréquence f, le facteur Q1 de qualité dégradé de l'antenne de l'objet portable montré sur la figure 1 et le facteur Q2 de qualité d'une antenne d'un objet portable à grande portée de couplage inductif.

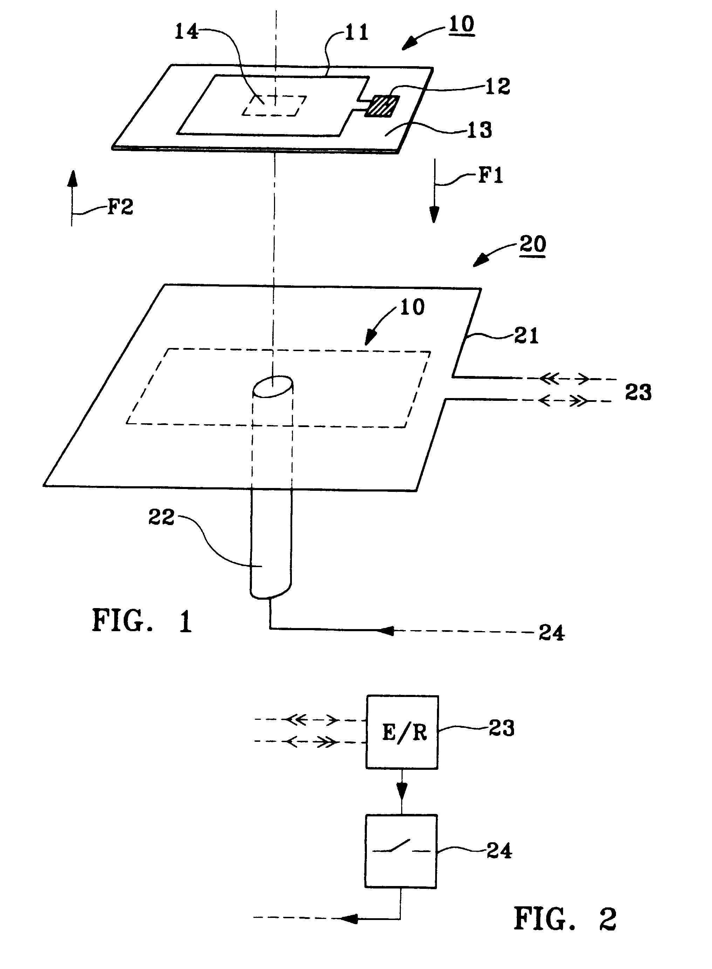

Sur la figure 1 est représenté de manière schématique un dispositif de transfert électronique d'informations entre un composant électronique 12 d'un objet portable 10 et un lecteur 20. Comme cela a déjà été mentionné plus haut, ledit objet portable 10 peut être un ticket de transport à usage limité ou un badge d'accès unique. Le lecteur 20 est en général incorporé à une borne de paiement ou d'identification fixe.

Le composant électronique 12 est, par exemple, une pastille semi-conductrice, ou puce, comportant au moins une mémoire non volatile dans laquelle sont stockées des informations qui devront être transmises au ou du lecteur 20. Le composant 12 est disposé sur le substrat 13 de l'objet portable 10, lequel peut être en matériau plastique ou, mieux car meilleur marché, en papier cartonné. Divers modes d'intégration du composant 12 au substrat 13 sont envisageables, notamment l'insertion du composant dans une cavité aménagée dans le substrat, à la manière des cartes à mémoire électronique ISO, largement répandues aujourd'hui.

On peut voir sur la figure 1 que le substrat 13 porte également une première antenne 11 reliée au composant 12. Avantageusement, l'antenne 11 est sérigraphiée sur le substrat 13 ou encore réalisée par reports de métallisation, par exemple dépôt d'aluminium sur du Mylar (marque déposée), ces techniques étant beaucoup moins coûteuses que celles utilisées pour obtenir des antennes à facteur de qualité élevée, impliquant des conducteurs à faible résistivité et de fort diamètre ou épaisseur.

Le lecteur 20 comporte une deuxième antenne 21 représentée de forme rectangulaire sur la figure 1 mais qui pourrait tout aussi bien être une boucle circulaire, le transfert électronique d'informations s'effectuant par couplage inductif entre les première 11 et deuxième 21 antennes lorsque l'objet portable 10 est amené, selon un mouvement sensiblement parallèle à la flèche F1, au voisinage très proche du lecteur 20, dans la position figurée en pointillés.

Ainsi que le montre la figure 1, le lecteur 20 comporte, dans une région centrale de la deuxième antenne 21, un moyen 22 de marquage apte à inscrire une marque dans une zone 14 du substrat 13 lorsque, précisément, l'objet portable 10 est placé à proximité immédiate du lecteur 20 dans la position en pointillés sur la figure 1. De cette manière, deux opérations sont effectuées dans le même mouvement d'approche de l'objet portable 10, à savoir la réalisation d'un couplage inductif suffisant entre les deux antennes 11, 21 et le marquage du substrat, propre à permettre l'identification par l'usager des objets portables déjà utilisés.

Selon un premier mode de réalisation, ledit moyen 22 de marquage est un laser apte à inscrire ladite marque sur le substrat 13 de l'objet portable 10, directement dans la zone 14 du substrat lui-même. De manière à réduire l'énergie nécessaire pour le laser, il y a avantage à ce que la zone 14 de marquage soit thermosensible, telle qu'un dépôt d'encre ou de résine thermosensible. La réduction de l'énergie du laser, outre la diminution de la consommation et du prix du laser, permet également de supprimer les risques pour l'usager. L'avantage du laser est qu'il permet d'inscrire une marque sous forme de caractères alpha-numériques.

Selon un deuxième mode de réalisation, ledit moyen de marquage est un flash apte à inscrire ladite marque sur une zone 14 du substrat 13 sur laquelle est déposée une encre photosensible. Dans ce cas, la marque inscrite apparaît sous la forme d'une zone de couleur différente de celle du substrat, sans possibilité d'inscription de caractères alpha-numériques.

Enfin, selon un troisième mode de réalisation, ledit moyen de marquage est constitué par la deuxième antenne 21 elle-même, apte à inscrire ladite marque par démagnétisation, lors de l'éloignement de l'objet portable 10 du lecteur 20 selon la flèche F2 de la figure 1, d'un matériau magnétosensible, comme du ferrofluide, déposé sur le substrat 13. Lorsque l'objet portable 10 quitte le champ de l'antenne 21, le ferrofluide est démagnétisé et change d'aspect visuel. Il suffit que le champ rémanent inscrit sur le substrat magnétique soit inférieur au champ-crête produit par l'antenne 21 à une distance égale à la distance autorisant le transfert électronique d'information.

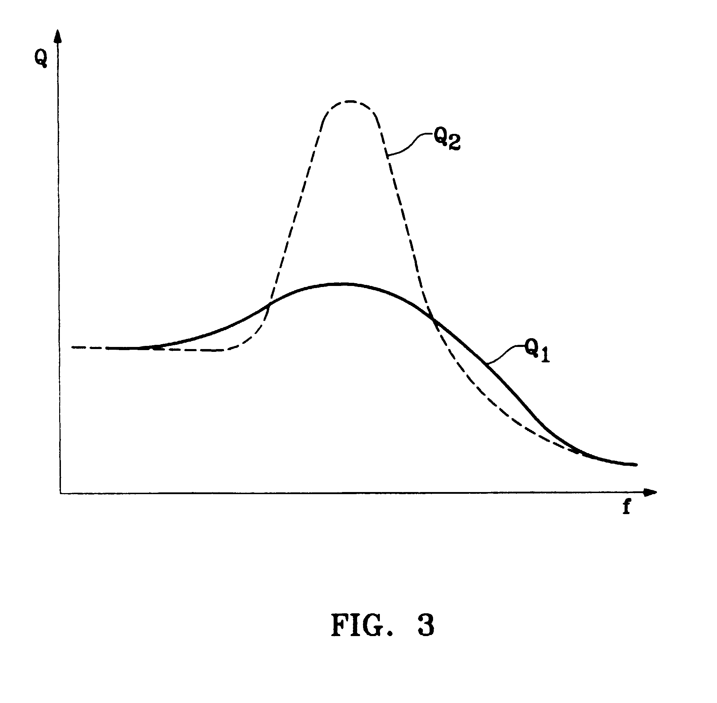

Conformément à la figure 2, la deuxième antenne 21 est reliée à une unité 23 de traitement qui permet de recevoir les informations transmises par le composant électronique 12, de traiter lesdites informations et d'émettre en retour vers le composant 12 les informations ainsi traitées.

On observera sur la figure 2 la présence de moyens 24 de commande du moyen 22 de marquage qui, sur un signal provenant de l'unité 23 de traitement, sont aptes à déclencher l'inscription de la marque sur le substrat 13 de l'objet portable 10 lors du transfert des informations. De cette manière, il est certain que le marquage ne peut se produire que si le transfert s'est effectivement produit.

Comme cela a été dit précédemment, la première antenne 11 couplée au composant électronique 12 peut présenter un facteur Q 1 de qualité dégradé, ne permettant le transfert électronique d'informations qu'en cas de proximité immédiate de l'objet portable 10 par rapport au lecteur 20. Dans ce cas, les performances médiocres de l'antenne 11 sont compensées par un fort couplage inductif entre les deux antennes 11, 21 du fait de leur distance très rapprochée. Par "dégradé", on entend un facteur de qualité inférieur au facteur Q2 de qualité que devrait avoir l'antenne 11 dans une utilisation où l'objet portable 10 ne s'approcherait pas de moins de quelques centimètres du lecteur 20. On a donné sur la figure 3 un diagramme représentant les facteurs Q1 et Q2 de qualité en fonction de la fréquence.

Afin de s'assurer que, malgré les performances dégradées de la première antenne 11, le transfert d'informations puisse s'effectuer dans des conditions satisfaisantes, le composant électronique 12 de l'objet portable 10 comprend des moyens de mesure du niveau du signal dans l'antenne 11. Le niveau ainsi mesuré est ensuite appliqué à des moyens de comparaison à une valeur de référence représentant le niveau minimal du signal dans l'antenne 11 à atteindre pour que le transfert puisse être réalisé. Si le niveau mesuré est au moins égal à ladite valeur de référence, le transfert sera autorisé ; dans le cas contraire, il sera interdit.

Ce niveau de référence sera réalisé par exemple à l'aide d'une source de tension. Le dépassement, même fugitif, de ce niveau déclenchera le transfert électronique. Lors du transfert ou à la fin, le marquage sera effectué.

## Revendications

1. Dispositif de transfert électronique d'informations entre, d'une part, un composant électronique (12) disposé sur un substrat (13) d'un objet portable (10), substrat sur lequel est également constituée une première antenne (11) reliée audit composant (10), et, d'autre part, un lecteur (20) comportant une deuxième antenne (21), ledit transfert électronique d'informations étant effectué par couplage inductif entre lesdites première (11) et deuxième (21) antennes, sans contact électrique entre le composant (12) et le lecteur (20), caractérisé en ce que ledit lecteur (20) comporte un moyen (22) de marquage apte à inscrire une marque sur ledit substrat (13) lorsque l'objet portable (10) est placé à proximité immédiate du lecteur (20), et en ce que ledit lecteur (20) comporte des moyens (24) de commande dudit moyen (22) de marquage qui, sur un signal provenant d'une unité (23) de traitement reliée à la deuxième antenne (2), sont aptes à déclencher l'inscription de ladite marque sur le substrat (13) de l'objet portable (10) lors du transfert électronique d'informations.

2. Dispositif selon la revendication 1, caractérisé en ce que ledit moyen de marquage est un laser (22) apte à inscrire ladite marque sur le substrat (13) de objet portable (10).

3. Dispositif selon la revendication 1, caractérisé en ce que ledit moyen de marquage est un laser (22) apte à inscrire ladite marque sur une zone thermosensible du substrat (13) de l'objet portable (10).

4. Dispositif selon la revendication 1, caractérisé en ce que ledit moyen de marquage est un flash apte à inscrire ladite marque sur une zone photosensible du substrat (13) de l'objet portable (10).

5. Dispositif selon la revendication 1, caractérisé en ce que ledit moyen de marquage est constitué par ladite deuxième antenne (21), apte à inscrire ladite marque par démagnétisation, lors de l'éloignement de l'objet portable (10) du lecteur (20), d'un matériau magnétosensible déposé sur ledit substrat (13).

6. Dispositif selon l'une quelconque des revendications 1 à 5, caractérisé en ce que ladite première antenne (11) couplée au composant électronique (12) présente un facteur (Q1) de qualité minimal ne permettant le transfert électronique d'informations qu'en cas de proximité immédiate de l'objet portable (10) par rapport au lecteur (20).

7. Dispositif selon la revendication 6, caractérisé en ce que ledit composant électronique (12) de l'objet portable (10) comprend des moyens de mesure de niveau de signal dans ladite première antenne (11) et des moyens de comparaison dudit niveau à une valeur de référence, le transfert électronique d'informations n'étant possible que si le niveau mesuré est au moins égal à ladite valeur de référence.
